# EUROPÄISCHE PATENTANMELDUNG

(11) **EP 1 508 520 A1**
(43) Veröffentlichungstag der Anmeldung: **23.02.2005**
(21) Anmeldenummer: 04090318.9
(22) Anmeldetag: 19.08.2004
(51) Int. Cl.: B65B 19/00, A24C 5/356

(54) **Anordnung und Verfahren zum aufeinanderfolgenden Entleeren von mit Artikeln gefüllten Behältern**

(30) Priorität: 19.08.2003 EP 03090258
(71) Anmelder: Hauni Maschinenbau AG, 21033 Hamburg (DE)
(72) Erfinder: Horn, Matthias, 22926 Ahrensburg (DE); Klingebiel, Karl-Heinz, 21447 Handorf (DE)
(74) Vertreter: Patentanwälte Wenzel & Kalkoff

(57) **Zusammenfassung**

Die Erfindung betrifft eine Anordnung und ein Verfahren zum aufeinanderfolgenden Entleeren von mit Artikeln gefüllten Behältern.

Bei bekannten Anordnungen und Verfahren werden die Behälter mittels einer Handhabungsvorrichtung aus einem Speicher entnommen und im Bereich einer Behälterstation abgesetzt. Die Behälter werden dann von einem Förderelement direkt an die Entleerungsstation gebracht, von wo aus sie durch Hubbewegung in einen schwenkbaren Rahmen gefördert werden. Dies hat jedoch den Nachteil, daß diverse Komponenten erforderlich sind, die zu einer großen Bauform führen. Des weiteren ist die Handhabung umständlich.

Die Aufgabe der Erfindung, eine kompakte Anordnung sowie ein Verfahren vorzuschlagen, die eine kompakte und leicht handhabbare Entleerung von Behältern ermöglichen, wird dadurch gelöst, daß die Anordnung derart ausgebildet ist, daß die Handhabungsvorrichtung und die Entleerungsstation direkt, also ohne Zwischenkomponenten miteinander kommunizieren. Dadurch kann auf diverse Komponenten verzichtet werden, was den Aufbau vereinfacht, die Bauform reduziert und die Handhabung erleichtert.

## Beschreibung

Die Erfindung betrifft eine Anordnung zum aufeinanderfolgenden Entleeren von mit Artikeln gefüllten Behältern, im wesentlichen umfassend eine Handhabungsvorrichtung zum Entnehmen eines Behälters aus einem Speicher und Zuführen desselben an eine Entleerungsstation sowie einen schwenkbaren Rahmen zur Aufnahme des Behälters und zum Entleeren desselben in die Entleerungsstation. Des weiteren betrifft die Erfindung ein Verfahren zum aufeinanderfolgenden Entleeren von mit Artikeln gefüllten Behältern, umfassend die Schritte: Entnehmen der Behälter aus einem Speicher mittels einer Handhabungsvorrichtung, Zuführen der Behälter an eine Entleerungsstation und Entleeren der Behälter in die Entleerungsstation.

Derartige Anordnungen und Verfahren kommen insbesondere in der tabakverarbeitenden Industrie zum Einsatz. Es besteht beispielsweise die Notwendigkeit, Filter vor der Verbindung mit einem Tabakstock oder dergleichen auszuhärten. Zu diesem Zweck werden die Filter in Behältern, sogenannten Schragen, aufbewahrt. Mehrere dieser Schragen sind üblicherweise in einem Schragencontainer zusammengefaßt. Einzelne oder mehrere Schragencontainer werden in einem Speicher zwischengelagert. Dieser Speicher kann z.B. ein Regal oder ein Rollwagen sein. Für den Fall, daß die in den Schragen gepufferten Filter wieder in die Verarbeitung eingeschleust werden sollen, z.B. über einen sogenannten Filtersender, müssen die Schragen entleert werden. Anstelle der Filter können in den Schragen auch andere Artikel, z.B. Zigaretten, aufbewahrt werden, die dann z.B. einer nachgeordneten Packmaschine zugeführt werden.

Zum Entleeren der Behälter ist die oben genannte Anordnung bekannt, die eine Handhabungsvorrichtung beinhaltet, mittels der die Behälter zur Entleerungsstation gebracht werden können. Die Handhabungsvorrichtung setzt die Behälter jedoch auf einer sogenannten Schragenstation ab, an der die Schragen in einen Rahmen geführt werden. Zusammen mit diesem Rahmen werden die Schragen mit geeigneten Fördermitteln zur Entleerungsstation geführt und dort entleert. Der bekannten Anordnung bzw. dem bekannten Verfahren haftet jedoch der Nachteil an, daß sie bzw. es konstruktiv aufwendig und umständlich in der Handhabung ist. Dadurch, daß die Behälter nach der Entnahme aus dem Speicher quasi auf der Schragenstation zwischengelagert werden, ist die Handhabung kompliziert und zeitintensiv, was wiederum zur Reduzierung der Leistungsfähigkeit führt. Im übrigen erhöht die Vielfalt der erforderlichen Komponenten auch die Herstellungskosten.

Der Erfindung liegt daher die Aufgabe zugrunde, eine kompakte und konstruktiv einfache Anordnung zu schaffen, die die Entleerung der Behälter in einfacher, leistungsfähiger und dennoch zuverlässiger Weise gewährleistet. Des weiteren ist es Aufgabe der Erfindung ein Verfahren vorzuschlagen, das auf einfach handhabbare und kostengünstige Weise eine Entleerung der Behälter ermöglicht.

Diese Aufgabe wird in Kombination mit den Merkmalen der eingangs genannten Anordnung dadurch gelöst, daß die Anordnung derart ausgebildet ist, daß die Entleerungsstation direkt von der Handhabungsvorrichtung mit Behältern belieferbar ist. Dadurch kann auf Zwischenkomponenten, wie z.B. eine Behälterstation und ein Förderelement verzichtet werden. Die erfindungsgemäße Anordnung ermöglicht daher eine besonders kompakte und kostengünstige Bauweise.

In einer bevorzugten Ausführungsform der Erfindung weist der schwenkbare Rahmen eine seitliche Öffnung für die horizontale Einführung der Behälter auf. Mit dieser Ausbildung ist die direkte Belieferung der Entleerungsstation besonders einfach und platzsparend möglich.

In einer Ausführungsform ist ein schwenkbarer Rahmen, vorzugsweise sind mehrere schwenkbare Rahmen übereinander, an der Entleerungsstation angeordnet. Dadurch ist eine Belieferung der Entleerungsstation ohne Stillstand derselben möglich, da ein Behälter in der Entleerungsstation entleert werden kann, während ein bereist entleerter Behälter aus der Entleerungsstation entnommen werden kann.

In einer weiteren vorteilhaften Ausführungsform ist der oder jeder schwenkbare Rahmen an der Handhabungsvorrichtung angeordnet. Mit dieser Ausführungsform ist durch die modulartige Anordnung des Rahmens an der Handhabungsvorrichtung eine verbesserte Handhabung, insbesondere im Reparatur- bzw. Wartungsfall gewährleistet. Des weiteren ermöglicht diese Anordnung die Fortsetzung des Betriebs der Entleerungsstation z.B. im Falle eines Defekts des Rahmens, was zu einer Erhöhung der Leitungsfähigkeit führt.

Des weiteren wird die Aufgabe durch ein Verfahren mit den eingangs genannten Schritten dadurch gelöst, daß die Behälter direkt von der Handhabungsvorrichtung an die Entleerungsstation geliefert werden. Mit dieser direkten Belieferung kann auf zeitaufwendige und damit teure Zwischenschritte verzichtet werden. Das erfindungsgemäße Verfahren ermöglicht eine schnelle und zuverlässige Handhabung bei der aufeinanderfolgenden Entleerung von Behältern.

Weitere bevorzugte Merkmale, Ausführungsformen und Verfahrensschritte ergeben sich aus den Unteransprüchen und der Beschreibung. Das Verfahren und besonders vorteilhafte Ausführungsformen werden anhand der Zeichnung näher erläutert. In der Zeichnung zeigt:
- Fig. 1: eine schematische Darstellung einer erfindungsgemäßen Anordnung mit zugeordnetem Speicher in perspektivischer Ansicht,
- Fig. 2: eine schematische Darstellung einer weiteren Ausführungsform der Anordnung mit zugeordnetem Speicher in perspektivischer Ansicht,
- Fig. 3a bis 3c): schematische Darstellungen einer weiteren Ausführungsform der Anordnung mit zugeordnetem Speicher in unterschiedlichen Bearbeitungspositionen in perspektivischer Ansicht, und
- Fig. 4: eine schematische Darstellung eines Einzelteils der Anordnung gemäß Figur 3 in vergrößerter und perspektivischer Ansicht.

Die gezeigten Anordnungen dienen zum Zuführen von in Behältern gespeicherten Artikeln, insbesondere von Filtern oder Zigaretten, an eine Entleerungsstation.

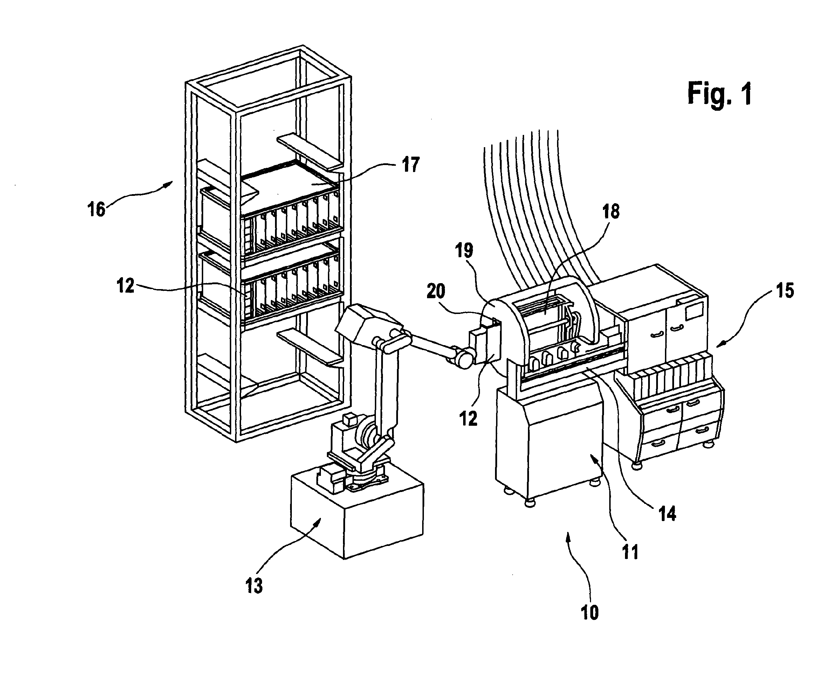

Die Figur 1 zeigt eine erste Ausführungsform einer Anordnung 10, die im wesentlichen aus einer Entleerungsstation 11 zum Entleeren von Behältern 12 sowie einer Handhabungsvorrichtung 13 zum Zuführen der Behälter 12 an die Entleerungsstation 11 besteht. Die Entleerungsstation 11 weist einen Schacht 14 auf, in den die mit Filtern, Zigaretten oder anderen Artikeln gefüllten Behälter 12 entleert werden. Der Schacht 14 führt zu einer nachgeordneten Vorrichtung 15. In der gezeigten Ausführungsform ist die nachgeordneten Vorrichtung 15 ein sogenannter Filtersender. Die Vorrichtung 15 kann jedoch auch dazu ausgebildet sein, z.B. Packmaschinen mit Zigaretten zu beliefern.

Die Handhabungsvorrichtung 13 ist in der gezeigten Ausführungsform als Roboterarm ausgebildet und dient zur Entnahme von Behältern 12 aus einem Speicher 16, der im Wirkungsbereich der Anordnung 10 angeordnet ist. Die Handhabungsvorrichtung 13 verfügt über mehrere Freiheitsgrade, so daß Dreh,- Schwenk- und/oder Linearbewegungen nacheinander oder überlagert ausführbar sind. In der Figur 1 ist der Speicher 16 als Regal ausgebildet. Andere übliche Speicherformen, wie z.B. Rollwagen oder dergleichen sind aber ebenfalls einsetzbar. Der Speicher 16 dient zur Aufnahme der Behälter 12, wobei mehrere Behälter 12, die auch als Schragen bezeichnet werden, in einem Container 17 zusammengefaßt. Die Container 17 sind derart ausgebildet und im Speicher 16 angeordnet, daß die Behälter 12 in linearer und horizontaler Richtung entnommen werden können. Die Ausbildung derartiger Behälter 12 ist bekannt, so daß auf deren detaillierte Beschreibung verzichtet wird.

Sämtlichen Ausführungsformen ist gemeinsam, daß die Handhabungsvorrichtung 13 und die Entleerungsstation 11 in unmittelbarer Wirkverbindung miteinander stehen. Das bedeutet, daß die Handhabungsvorrichtung 13 und die Entleerungsstation 11 ohne Zwischenschaltung irgendwelcher Komponenten einen direkten Austausch der Behälter 12 realisieren.

In der Ausführungsform gemäß Figur 1 ist im Bereich der Entleerungsstation 11 ein Rahmen 18 angeordnet. Dieser Rahmen 18 ist fest aber lösbar an der Entleerungsstation 11 schwenkbar befestigt. Zum Schwenken des Rahmens 18 kann wahlweise ein (nicht dargestellter) Antrieb innerhalb der Entleerungsstation 11 angeordnet sein, oder der Antrieb für den Rahmen 18 ist außerhalb der Entleerungsstation 11 angeordnet, was bedeutet, daß der Rahmen 18 selbst antriebslos ist. Es ist alternativ auch möglich, daß der Rahmen 18 durch ohnehin in der Entleerungsstation 11 vorhandene Antriebe antreibbar ist. Der Rahmen 18 ist in einer Art Trommel 19 angeordnet, die oberhalb des Schachtes 14 angeordnet ist. Der Rahmen 18 verfügt über eine Öffnung 20 zur Aufnahme der Behälter 12, die durch die Öffnung 20 und eine korrespondierende Öffnung in der Trommel seitlich und linear in den Rahmen 18 einschiebbar sind.

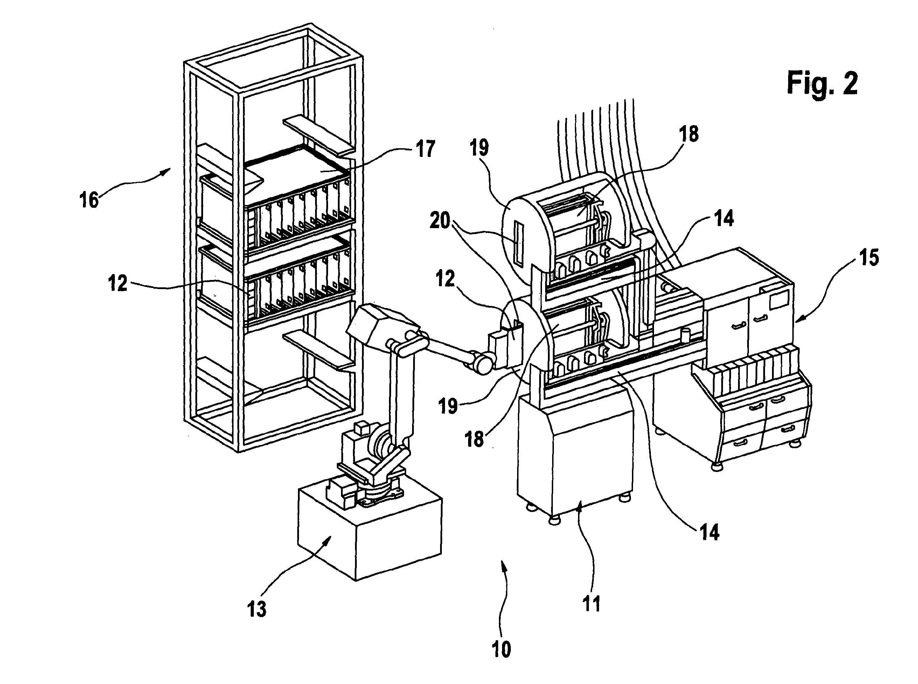

In der Ausführungsform gemäß Figur 2, die im wesentlichen der Ausführungsform gemäß Figur 1 entspricht und daher nicht im Detail beschrieben wird, sind zwei Rahmen 18 übereinander angeordnet. Jeder Rahmen 18 ist an einen separaten Schacht 14 angeschlossen, die beide zu der nachgeordneten Vorrichtung 15 führen. Es können auch noch mehr Rahmen 18 an einer Entleerungsstation 11 angeordnet sind, wobei die Konfiguration, z.B. ob die Rahmen 18 nebeneinander, übereinander oder anders zueinander angeordnet sind, von der jeweiligen Anwendung und vom Platzangebot abhängt.

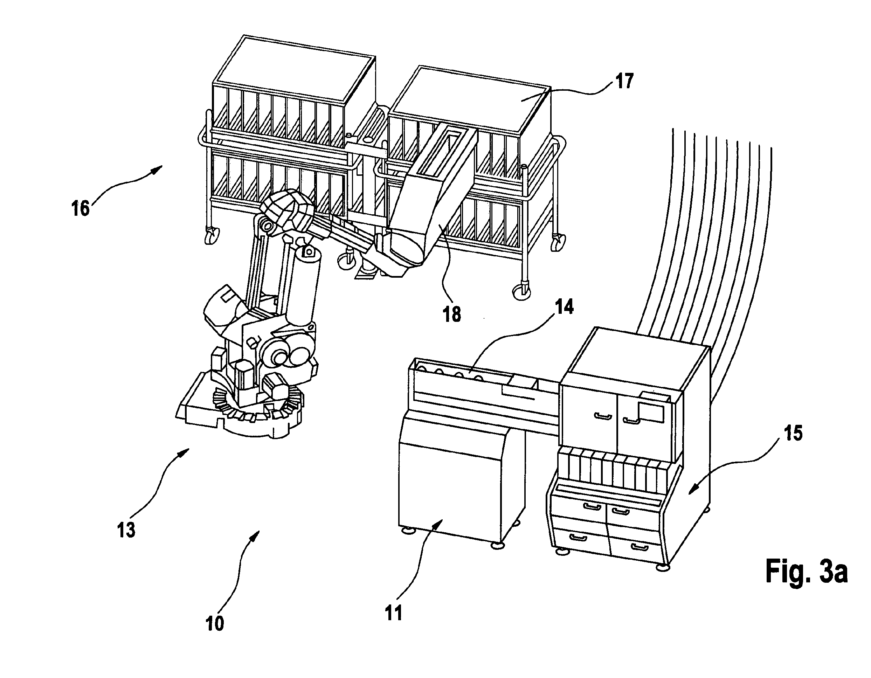

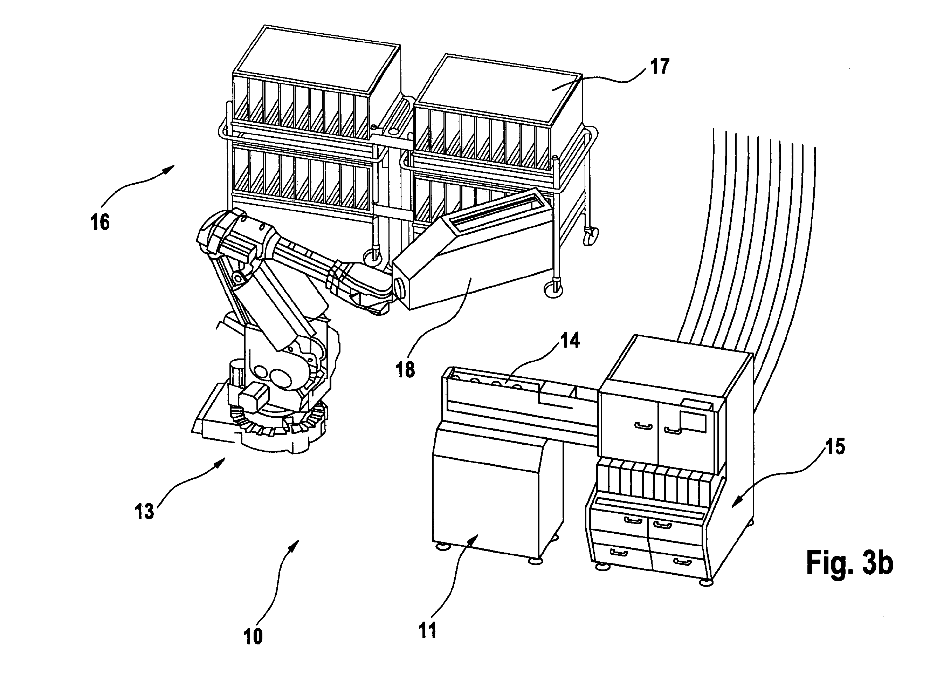

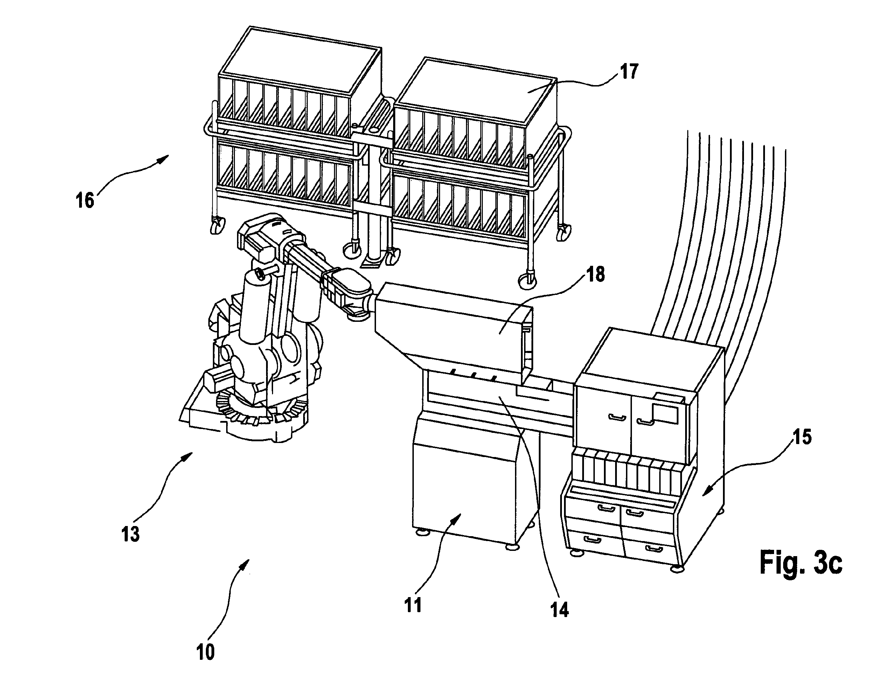

Die in den Figuren 3a bis 3c beschriebene Ausführungsform umfaßt im wesentlichen dieselben Komponenten wie die zuvor beschriebenen Anordnungen 10, so daß für gleiche Teile dieselben Bezugsziffern verwendet werden. Im Unterschied zu den Anordnungen 10 der Figuren 1 und 2 ist der Rahmen 18, der auch als Kassette bezeichnet werden kann, an der Handhabungsvorrichtung 13 angeordnet. Der Rahmen 18 dient damit zur direkten Entnahme der Behälter 12 aus dem Speicher 16. Der Speicher 16 selbst ist in dieser Form als Rollmagazin oder Rollwagen ausgebildet. In weiteren nicht gezeigten Ausführungsformen können auch mehrere Rahmen 18 an der Handhabungsvorrichtung 13 angeordnet sein.

Im folgenden wird das Verfahren anhand der Schrittfolge der Figuren 3a bis 3c näher erläutert:

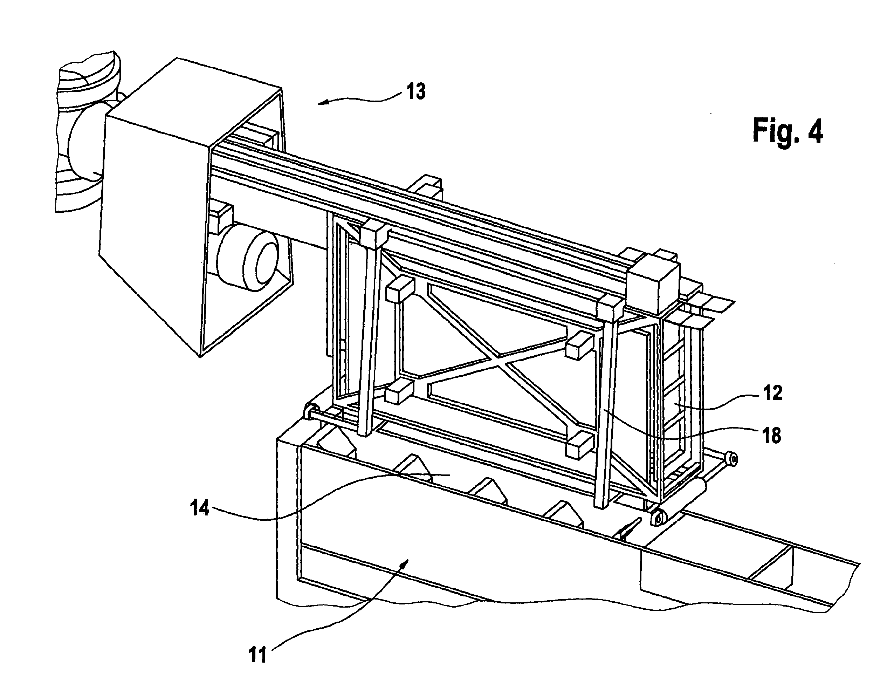

Die Handhabungsvorrichtung 13 schwenkt mit dem Rahmen 18 zu dem Speicher 16, so daß die Öffnung des Rahmens 18 unmittelbar vor einem Behälter 12 positioniert ist. Mittels geeigneter Greif- und/oder Antriebsmittel wird der Behälter 12 aus dem Speicher 16 bzw. dem Container 17 in horizontaler und linearer Richtung in den Rahmen 18 gezogen. Nachdem der Behälter 12 vollständig innerhalb des Rahmens 18 angeordnet ist, schwenkt die Handhabungsvorrichtung 13 mit dem Rahmen 18 und dem (vollen) Behälter 12 zur Entleerungsstation 11. Während dieser Schwenkbewegung kann in einer überlagerten Schwenkbewegung der Rahmen 18 um 180° gedreht werden, so daß der Rahmen 18 mit einer verschließbaren Entleerungsöffnung nach unten gerichtet ist. Die durch Antriebsmittel ausgelöste Schwenkbewegung des Rahmens 18 kann auch erfolgen, nachdem der Rahmen 18 seine Position oberhalb des Schachts 14 der Entleerungsstation 11 erreicht hat. Der Rahmen 18 wird dann an der Entleerungsstation 11 adaptiert und die Entleerungsöffnung des Rahmens 18 wird geöffnet, so daß die Artikel aus dem Behälter 12 in den Schacht 14 fallen. Der Figur 4 ist zu entnehmen, wie die Behälter 12 innerhalb des Rahmens 18 angeordnet und oberhalb des Schachts 14 positioniert werden. Sobald der Behälter 12 vollständig entleert ist, schwenkt die Handhabungsvorrichtung 13 mit dem Rahmen 18 und dem (leeren) Behälter 12 zurück zum Speicher 16. Dort wird der leere Behälter 12 abgelegt und ein neuer voller Behälter 12 kann aufgenommen werden. Bei der Bewegung in Richtung des Speichers 16 wird der Rahmen 18 wieder in seine Ausgangsposition, nämlich mit nach oben gerichteter Entleerungsöffnung, geschwenkt.

Prinzipiell läuft das Verfahren mit den Anordnungen 10 der Figuren 1 und 2 gleich ab. Allerdings entnimmt die Handhabungsvorrichtung 13 aus dem Speicher 16 einen Behälter 12 und führt diesen zur Entleerungsstation 11. An der Entleerungsstation 11 wird der Behälter 12 durch die seitliche Öffnung 20 in den Rahmen 18 eingeführt. Durch Schwenken des Rahmens 18 um 180° werden die in dem Behälter 12 angeordneten Artikel in den Schacht 14 gefüllt, von wo aus die Artikel der nachgeordneten Vorrichtung 15 zugeführt werden. Der Antrieb zum Schwenken kann einerseits durch einen Antrieb der Entleerungsstation 11 selbst erfolgen. Es besteht aber auch die Möglichkeit, daß die Schwenkbewegung durch die Handhabungsvorrichtung 13 ausgelöst wird, indem die mit dem Behälter 12 wirkverbundene Handhabungsvorrichtung 13 eine Schwenkbewegung ausführt, die unmittelbar auf den Behälter 12 und damit auf den Rahmen 18 übertragen wird. Mit der Anordnung 10 gemäß Figur 2 kann z.B. ein (voller) Behälter 12 an den unteren Rahmen 18 zugeführt werden, während im oberen Rahmen 18 gerade ein Behälter 12 entleert wird. Des weiteren können z.B. auch mehrere Rahmen 18 gleichzeitig entleert werden. Hierzu könnte z.B. optional eine zweite Handhabungsvorrichtung 13 vorgesehen sein. In einer weiteren Ausführung könnte die Handhabungsvorrichtung 13 auch derart ausgebildet sein, daß mehrere Behälter 12 gleichzeitig aus dem Speicher 16 entnommen werden können.

Bei sämtlichen Ausführungsformen der Erfindung werden die Behälter 12 unmittelbar und direkt von der Handhabungsvorrichtung 13 zur Entleerung an die Entleerungsstation 11 gebracht, so daß eine zügige und kompakte Entleerung erfolgen kann.

## Patentansprüche

1. Anordnung zum aufeinanderfolgenden Entleeren von mit Artikeln gefüllten Behältern (12), im wesentlichen umfassend eine Handhabungsvorrichtung (13) zum Entnehmen eines Behälters (12) aus einem Speicher (16) und Zuführen desselben an eine Entleerungsstation (11) sowie einen schwenkbaren Rahmen (18) zur Aufnahme des Behälters (12) und zum Entleeren desselben in die Entleerungsstation (11), **dadurch gekennzeichnet, daß** die Anordnung (10) derart ausgebildet ist, daß die Entleerungsstation (11) direkt von der Handhabungsvorrichtung (13) mit Behältern (12) belieferbar ist.

2. Anordnung nach Anspruch 1, **dadurch gekennzeichnet, daß** die Handhabungsvorrichtung (13) und die Entleerungsstation (11) in unmittelbarer Wirkverbindung miteinander stehen.

3. Anordnung nach Anspruch 1 oder 2, **dadurch gekennzeichnet, daß** der schwenkbare Rahmen (18) eine seitliche Öffnung (20) für die horizontale und lineare Einführung der Behälter (12) aufweist.

4. Anordnung nach einem der Ansprüche 1 bis 3, **dadurch gekennzeichnet, daß** mehrere schwenkbare Rahmen (18) vorzugsweise übereinander vorgesehen sind.

5. Anordnung nach einem der Ansprüche 1 bis 4, **dadurch gekennzeichnet, daß** der oder jeder schwenkbare Rahmen (18) an der Entleerungsstation (11) angeordnet ist.

6. Anordnung nach Anspruch 5, **dadurch gekennzeichnet, daß** jeder schwenkbare Rahmen (18) antriebslos ist.

7. Anordnung nach Anspruch 6, **dadurch gekennzeichnet, daß** jeder schwenkbare Rahmen (18) durch die Handhabungsvorrichtung (13) antreibbar ist.

8. Anordnung nach einem der Ansprüche 1 bis 5, **dadurch gekennzeichnet, daß** jeder schwenkbare Rahmen (18) einen Antrieb aufweist.

9. Anordnung nach einem der Ansprüche 1 bis 4, **dadurch gekennzeichnet, daß** der oder jeder schwenkbare Rahmen (18) an der Handhabungsvorrichtung (13) angeordnet ist.

10. Verfahren zum aufeinanderfolgenden Entleeren von mit Artikeln gefüllten Behältern, umfassend die Schritte:
- Entnehmen der Behälter (12) aus einem Speicher (16) mittels einer Handhabungsvorrichtung (13),
- Zuführen der Behälter (12) an eine Entleerungsstation (11) und
- Entleeren der Behälter (12) in die Entleerungsstation (11)
**dadurch gekennzeichnet,daß**
- die Behälter (12) direkt von der Handhabungsvorrichtung (13) an die Entleerungsstation (11) geliefert werden.

11. Verfahren nach Anspruch 10, **dadurch gekennzeichnet, daß** die Behälter (12) linear in horizontaler Richtung in den Rahmen (18) eingeführt werden.

12. Verfahren nach Anspruch 10 oder 11, **dadurch gekennzeichnet, daß** die Behälter (12) direkt aus dem Speicher (16) in einen an der Handhabungsvorrichtung (13) angeordneten Rahmen (18) eingeführt und dann direkt an die Entleerungsstation (11) geführt werden, wo sie durch Schwenken des Rahmens (18) entleert werden.

13. Verfahren nach Anspruch 10 oder 11, **dadurch gekennzeichnet, daß** die Behälter (12) von der Handhabungsvorrichtung (13) direkt aus dem Speicher (16) entnommen und dann direkt in einen an der Entleerungsstation (11) angeordneten Rahmen (18) geführt und durch Schwenken des Rahmens (18) entleert werden.

14. Verfahren nach einem der Ansprüche 10 bis 13, **dadurch gekennzeichnet, daß** mehrere Behälter (12) gleichzeitig aus dem Speicher (16) entnommen und an der Entleerungsstation (11) entleert werden.
